# EUROPEAN PATENT APPLICATION

(11) **EP 2 380 834 A2**
(43) Date of publication of application: **26.10.2011**
(21) Application number: 11163238.6
(22) Date of filing: 20.04.2011
(51) Int. Cl.: B65G 69/28

(54) **Dock Leveller for Loading Dock with Integral On-Demand Compressor and Pneumatic Actuator**

(30) Priority: 21.04.2010 US 764553
(71) Applicant: Blue Giant Equipment Corporation, Brampton, Ontario L6W 3K2 (CA)
(72) Inventor: Ion, Gregory, Toronto Ontario (CA)
(74) Representative: Gillam, Francis Cyril

(57) **Abstract**

A loading dock leveller having: a base having an inward end; a deck with a top platform, the deck having an inward end hingedly mounted to the inward end of the base for movement between an upper position and a lower position; an on-demand air compressor with an electrically powered motor, the compressor having inlet in communication with a source of ambient air and a compressed air outlet; a pneumatic deck lift actuator pivotally connected to the base and to the deck for rotary movement between a raised position and a lowered position, the lift actuator having a lift chamber, and an inlet port in direct communication with the compressor outlet through an electric powered lift valve to the lift chamber, and having a vent valve in communication with the lift chamber; and an electric user control interface having: an electric up/down switch in communication with the motor to conduct electric power to the motor and open the lift valve in an up position, and to prevent conduction of electric power to the motor and open the vent valve in a down position; wherein the compressor, motor, lift valve; vent valve and lift actuator are disposed between the base and the deck.

## Description

The invention relates to a dock leveller with a movable deck having an integral on-demand compressor and pneumatic actuator to move between a downward and an upward inclination.

Loading dock levellers are commonly used for providing an inclined ramp or a level bridge between the surface of a transport truck deck and the floor surface of a loading dock of a building thereby facilitating the loading and unloading of the truck by wheeled vehicles, as well as pedestrian or animal traffic if necessary.

Transport trucks have load carrying decks that vary in height above the pavement depending on the size of truck, the intended use of the truck and the state of compression that the truck suspension is in when loaded or unloaded. Since any truck arriving at a dock may have a deck within a range of heights and the height can float with the suspension under loading, the loading dock leveller must be able to move vertically and the outside end often pivots from a fixed pivot point on the building to rest on the top surface of the truck deck. The movable deck of the dock leveller usually has a main deck that pivots from the building and an outside lip plate that is thin and of relatively short length that pivots on the outside end of the main deck to provide a smooth transition between the truck deck surface and the main deck.

In many environments the use of hydraulic oil actuators is not acceptable due to the risk of contamination by oil leaks, health or other safety concerns. For example in food or drug processing, handling or distribution facilities the use of pressurized air actuators are chosen eliminate the risk of contaminating these consumable products with leaked oil.

Traditionally, relatively large air compressors are used in manufacturing environments to provide all of the compressed air needs for a facility, such as pneumatic tools, grinders, nail guns, clamps, material handling and lifting devices that include pneumatic cylinders. Due to the multiple demands on the compressed air supply, traditionally a central compressor with a large storage tank or receiver and centralized oil/water separator has been found to be the most efficient in terms of purchase price, operating costs and maintenance demands. Compressed air is relatively safe without shock or explosion hazards, compressed air driven equipment is often less expensive than electrical driven equipment and use of compressed air is relatively inexpensive when there are multiple demands for power.

Recent years have seen air compressors being used beyond the traditional manufacturing and automotive repair environments. Light weight, inexpensive, portable air compressors are now also common in construction and home workshop environments to power pneumatic nail guns, grinders, paint sprayers and other common household or construction tools.

Consumer demand for air compressors and pneumatic tools has resulted in such equipment being commonplace in local building supply, hardware, and automotive supply stores. As a consequence small capacity air compressors have been produced in large quantities making low cost reliable compressors easily available for purchase and with rapid maintenance, warranties and replacement like many other commonplace consumer appliances.

Such consumer directed air compressors are generally sold with an air storage receiver tank for the same reasons that larger air compressors are paired with storage tanks. The storage of compressed air is considered as a desirable buffer to balance out the demand for compressed air from a single or multiple tools or other equipment. The store of compressed air enables the compressor to avoid being activated and deactivated in short cycles since the store of compressed air can provide short bursts of compressed air of sufficient quantity and pressure without requiring the compressor to activate. Of course the larger the storage tank, the larger the delay between demand starting and compressor activation. Therefore storage tanks are generally used in combination with air compressors to reduce the on/off cycles of the air compressor and electric motors driving the compressors which is seen as necessary to maintain a long duty cycle for the electric motors and compressors. Most equipment with moving parts, switches and valves have a longer life span if they are run continuously for discrete periods, rather than being constantly turned on and off in rapid short bursts. The wear and tear of rapid on/off cycles shortens the service life and increases maintenance demands for most equipment and storage of compressed air in receiver tanks is considered desirable to extend the life of the air compressor and electric motors driving them.

The present invention includes a dock leveller mechanism having an on-demand air compressor and pneumatic power actuator that improves performance, lowers cost and simplifies manufacturing and maintenance.

Features that distinguish the present invention from the background art will be apparent from a review of the disclosure, drawings and description of the invention presented below.

The invention provides a loading dock leveller having: a base having an inward end; a deck with a top platform, the deck having an inward end hingedly mounted to the inward end of the base for movement between an upper position and a lower position; an on-demand air compressor with an electrically powered motor, the compressor having inlet in communication with a source of ambient air and a compressed air outlet; a pneumatic deck lift actuator pivotally connected to the base and to the deck for rotary movement between a raised position and a lowered position, the lift actuator having a lift chamber, and an inlet port in direct communication with the compressor outlet through an electric powered lift valve to the lift chamber, and having a vent valve in communication with the lift chamber; and an electric user control interface having: an electric up/down switch in communication with the motor to conduct electric power to the motor and open the lift valve in an up position, and to prevent conduction of electric power to the motor and open the vent valve in a down position; wherein the compressor, motor, lift valve; vent valve and lift actuator are disposed between the base and the deck.

Further, the deck can include a lip plate hingedly mounted to a front edge thereof, the deck including a pneumatic lip actuator pivotally connected to the lip plate for rotary movement between a deployed position and a retracted position, the lip actuator having a deploy chamber, and an inlet port in direct communication with the compressor outlet through an electric powered lip deploy valve to the deploy chamber, and having a vent valve in communication with the deploy chamber. The electric user control interface may also have an electric deploy/retract switch in communication with the motor to conduct electric power to the motor and open the lip deploy valve in a deploy position, and to prevent conduction of electric power to the motor and open the vent valve in a retract position.

The on-demand nature of the direct connection between the air compressor and the pneumatic lift actuator and pneumatic deploy actuator has a number of advantages. The integral dedicated compressor uses minimal power since a store of compressed air is unnecessary and the actuators are pressurized only by as much compressed air that is needed. The actuators are independently operated by the controls and therefore only the movement required with the minimal air power required is used.

The dock leveller may be easily installed and maintained in environments that do not have compressed air available and where conventional dock levellers may be considered too expensive, too bulky and too complex. The compressor may be electrically powered with common 110 or 220 Volt AC electric power, so it is relatively simple to install. A low cost mass produced air compressor can be provided which is relatively inexpensive and the use of electrically powered on-demand compressor dedicated and integral to the dock leveller enables use of the leveller in many shipping environments that do not otherwise have any need for nor provision of compressed air.

The disposing of all operating components between the base and the deck in a clam-shell manner protects the equipment. These advantages make such dock levellers more accessible and practical for a wider range of potential purchasers as a result of the on-demand nature of the air compressor used.

In order that the invention may be readily understood, one embodiment of the invention is illustrated by way of example in the accompanying drawings.
Figure 1 is a front isometric view of a loading dock leveller with the deck in the upper position and the in the inflated position.
Figure 2 is a front view of the loading dock leveller of Fig. 1 in the inflated position.
Figure 3 is a sectional view of the loading dock leveller along line 3-3 of Fig. 2.

Further details of the invention and its advantages will be apparent from the detailed description included below.

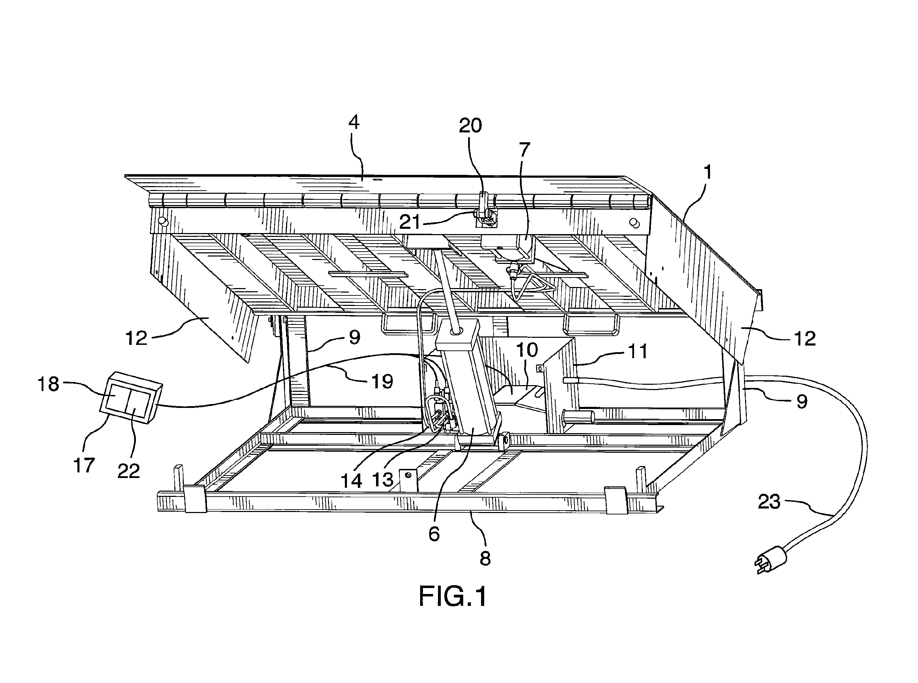

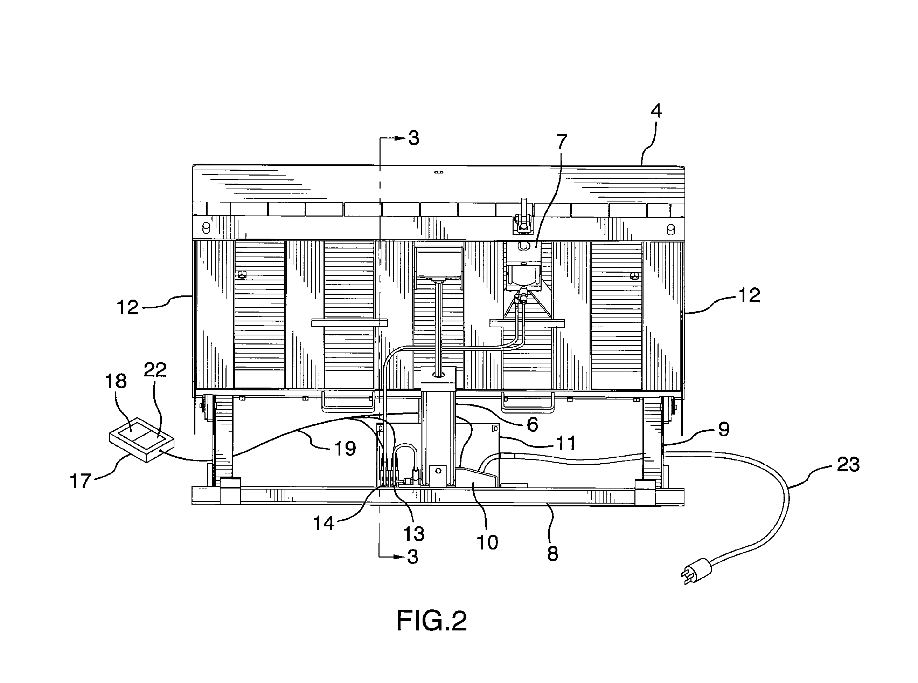

Figures 1-3 show the loading dock leveller which is generally rectangular and fits within a rectangular threshold recess adjacent a truck loading doorway in a building, or in the edge of a raised dock platform. The dock platform, and floor of the building are at the level of the rear of the dock leveller. The building and doorway are not shown since such arrangements are commonly known to those skilled in the art.

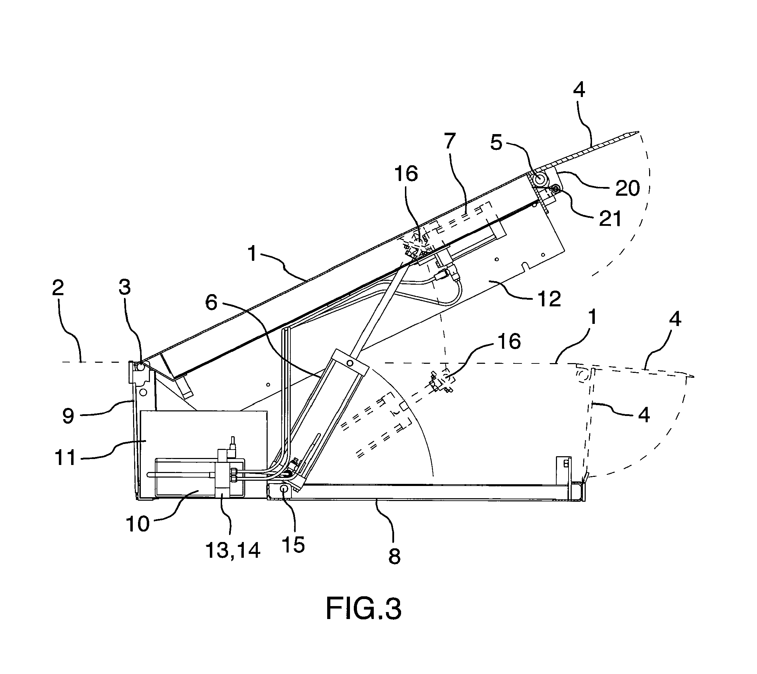

Figure 3 shows the movable deck 1 of the dock leveller with a top platform surface on which wheeled vehicles, people or animals travel. The deck 1 pivots relative to the building floor 2 about a hinge pin 3. The outside lip plate 4 is relatively thin and of relatively short length to pivot on a pin 5 on the outside end of the main deck 1 and when lowered the lip plate 4 provides a smooth transition between the truck deck surface and adjacent main deck 1. The pneumatic lift actuator 6 moves the deck 1 of the dock leveller between the upper position and the lower position, and independently the lip plate 4 is moved between the deployed position and a retracted position by the lip actuator 7 as shown in Fig. 3 in particular.

Figures 1-3 show the loading dock leveller with deck 1 in its uppermost position and the lip plate 4 fully deployed. After a truck is backed up to the dock and secured, the deck 1 may be lifted and lip plate 4 deployed the minimum distances required to lay the lip plate 4 on the truck bed and provide a ramp or bridge between the building floor 2 and the truck bed.

The loading dock leveller is made up of a base 8 having two inward end posts 9 with the deck 1 having its inward end hingedly mounted to the inward end of the base 8 with a pin 3 for movement between the upper position illustrated and a lower position indicated in dashed outline in Fig. 3.

An integral on-demand air compressor 10 with an associated electrically powered motor is shown inside a protective sheet metal housing 11. The electric motor of the compressor 10 can be simply powered with a 110 or 220 Volt AC power cord 23 with a standard three prong plug into a standard 110 or 220 Volt AC receptacle outlet. Optionally, 12 Volt DC battery powered compressors 10 are available and a battery can be housed within the same housing 11. Of course the clam-shell arrangement of the deck 1, base 8, side skirt plates 12 and retracted lip plate serve to encase all of the operating components in a compact protective enclosure.

The compressor 10 has inlet in communication with a source of ambient air preferably through on air inlet filter and has a compressed air outlet that passes compressed air directly to the lift actuator 6 through the electrically powered lift valve 13. In a like manner the compressed air outlet of the compressor 10 that passes compressed air directly to the lip actuator 7 through the electrically powered lip deploy valve 14.

The pneumatic deck lift actuator 6 is pivotally connected to the base 8 at pin 15 and to the deck 1 at pin 16 (see Fig. 3) for rotary movement between the raised position and the lowered position. The lift actuator 6 having a pressurized air lift chamber, and an inlet port in direct communication with the compressor outlet through the electric powered lift valve 13 without the requirement of any air storage tank. The lift chamber of the lift actuator 6 is relatively large and corrosion resistant to receive pressurized air directly from the compressor and eliminates any need for intermediate air storage because the air compressor serves only the two actuators 6, 7 on a relatively low duty cycle when needed.

To release pressurized air from the lift actuator 6 the lift chamber is connected to a vent valve portion at the bottom of the lift valve 13 as illustrated to exhaust air to the atmosphere. Preferably the air vents slowly through an air flow restrictor so that a slow controlled downward movement results as opposed to a dangerous fast release. Of course the invention is equally applicable to double acting pneumatic cylinders where opposing sides of the piston within the cylinder are connected to alternating open/close pneumatic valves in a manner well known to those skilled in the art.

The on-demand integral compressor 10 has preferably a relatively high pressure for example 100-150 psi (pounds per square inch) whereas typical air compressors for shop use in factories or auto repair shops is provided at 80 psi. The on-demand compressor 10 is connected directly with a short length of pipe to the lift actuator 6 which reduces the risk of air leakage to a minimum. Conventional air compressors with storage tanks and long lines of air hoses or pipes tend to leak and to maintain a store of compressed air requires the compressor to turn off and on continuously when leakage occurs. The use of a minimal short pipe between the compressor 10 and the actuators 6, 7 ensures that leakage or the high pressure air at 150 psi is eliminated or is minimal and that the compressor 10 is only operated on-demand when movement of the actuators 6, 7 is needed. The on-demand feature and elimination of air leakage reduces energy consumption.

An electric user control interface 17 has an electric up/down switch 18 in communication with the electric motor of the compressor 10 via control cable 19 to conduct electric power to the motor and open the lift valve 13 in an up position, and to prevent conduction of electric power to the motor and open the vent valve in a down position.

As best seen in Figures 1 and 3, the deck 1 includes a lip plate 4 hingedly mounted by a pin 5 to its front edge. On the underside of the deck 1 is mounted the pneumatic lip deploy actuator 7 pivotally connected to a lug 20 of the lip plate with pin 21 for rotary movement between the deployed position (solid lines at top of Fig. 3) and a retracted position (dashed lines at bottom of Fig. 3). The lip actuator 7 has a deploy chamber, and an inlet port in direct communication with the compressor outlet through the electric powered lip deploy valve 14 and the deploy chamber is connected to a vent valve portion at the bottom of the deploy valve 14 as illustrated to exhaust air to the atmosphere.

The electric user control interface 17 has an electric deploy/retract switch 22 in communication with the electric motor of the compressor 10 to conduct electric power to the motor and open the lip deploy valve 14 in a deploy position, and to prevent conduction of electric power to the motor of the compressor 10 and open the vent valve portion at the bottom of the deploy valve 14 as illustrated to exhaust air to the atmosphere to move the lip plate 4 to the retract position.

Of course the lip deploy actuator 7 may also be configured as a double acting pneumatic cylinder if desired. The user interface 17 can be configured as a wireless remote transmitter with cooperating receiver communicating with the valves 13, 14. The compressor 10, motor, valves 13, 14, and housing 11 can be packaged together for ease of repair and installation.

The above description relates to a specific preferred embodiment as presently contemplated by the inventor, it will be understood that the invention in its broad aspect includes mechanical and functional equivalents of the elements described herein.

## Claims

1. A loading dock leveller comprising:
- a base (8) having an inward end;
- a deck (1) with a top platform, the deck (1) having an inward end hingedly mounted to the inward end of the base for movement between an upper position and a lower position;
**characterized in that**:
- an on-demand air compressor (10) with an electrically powered motor, the compressor (10) having inlet in communication with a source of ambient air and a compressed air outlet;
- a pneumatic deck lift actuator (6) pivotally connected to the base (8) and to the deck (1) for rotary movement between a raised position and a lowered position, the lift actuator (6) having a lift chamber, and an inlet port in direct communication with the compressor outlet through an electric powered lift valve (13) to the lift chamber, and having a vent valve in communication with the lift chamber; and
- an electric user control interface (17) having: an electric up/down switch (18) in communication with the motor to conduct electric power to the motor and open the lift valve (13) in an up position, and to prevent conduction of electric power to the motor and open the vent valve in a down position;
wherein the compressor (10), motor, lift valve (13); vent valve and lift actuator (6) are disposed between the base (8) and the deck (1).

2. The loading dock leveller according to claim 1, **characterized in that**, the deck (1) includes a lip plate (4) hingedly mounted to a front edge thereof, the deck (1) including a pneumatic lip actuator (7) pivotally connected to the lip plate (4) for rotary movement between a deployed position and a retracted position, the lip actuator (7) having a deploy chamber, and an inlet port in direct communication with the compressor outlet through an electric powered lip deploy valve (14) to the deploy chamber, and having a vent valve in communication with the deploy chamber.

3. The loading dock leveller according to claim 1, **characterized in that**, the electric user control interface (17) has an electric deploy/retract switch (22) in communication with the motor to conduct electric power to the motor and open the lip deploy valve (14) in a deploy position, and to prevent conduction of electric power to the motor and open the vent valve in a retract position; wherein the lip deploy valve (14) and lip actuator (7) are disposed between the base (8) and the deck (1).
